# FASCICULE DE BREVET EUROPEEN

(11) **EP 0 538 137 B1**
(45) Date de publication et mention de la délivrance du brevet: **10.12.1997**
(21) Numéro de dépôt: 92402827.7
(22) Date de dépôt: 16.10.1992
(51) Int. Cl.: F41A 9/76, B65G 23/14, B65G 47/82

(54) **Magasin de munitions, en particulier pour char**
Munitionsmagazin, insbesondere für Kampfpanzer
Ammunition magazine, especially for tanks

(30) Priorité: 17.10.1991 FR 9112796
(43) Date de publication de la demande: 21.04.1993
(73) Titulaire: GIAT Industries, F-78034 Versailles Cédex (FR)
(72) Inventeur: Mouterde, Renaud, F-78000 Versailles (FR); Bouzianne, Michel, F-78390 Bois d'Arcy (FR)

(56) Documents cités:
- EP-A- 0 301 259
- EP-A- 0 337 735
- EP-A- 0 361 050
- DE-A- 2 433 568

## Description

La présente invention concerne un magasin de munitions, en particulier pour char.

D'une manière générale, les munitions stockées dans un char sont prélevées dans un magasin et chargées manuellement dans le tube du canon. Ce magasin, où les munitions sont stockées à l'horizontale, est situé dans la tourelle du char, c'est-à-dire en partie haute et dans une zone pas trop éloignée du canon pour faciliter les opérations de chargement. En d'autres termes, le magasin est une zone de stockage aménagée dans la tourelle, cette zone étant compartimentée pour recevoir les munitions introduites depuis l'extérieur de la tourelle.

Or, il est reconnu que la tourelle d'un char est une zone vulnérable mal protégée des projectiles de l'ennemi. Il est tout autant reconnu que la zone la moins exposée se situe en partie basse et à l'arrière du char. Cependant, si le choix d'un tel emplacement pour le magasin de munitions offre des conditions de sécurité maximum pour l'équipage, il n'est pas sans poser le problème de l'acheminement des munitions jusqu'au tube du canon.

Le brevet EP-A-361 050 décrit un convoyeur à chaîne sans fin pour un chargeur de munitions destiné à alimenter automatiquement une arme à feu embarquée dans un avion de chasse. Le convoyeur qui forme une double boucle stocke les munitions et les achemine vers une sortie du chargeur. Cependant, le problème posé par ce convoyeur est de pouvoir absorber les forces d'accélération engendrées au début d'une rafale tirée par l'arme, en utilisant des moyens auxiliaires simples. Ce problème ne se pose pas dans le cas du canon de char qui tire au coup par coup.

Le brevet DE-A-2 433 568 décrit un magasin de munitions aménagé dans la partie basse de la tourelle d'un char. Il est constitué d'un ensemble de munitions liées entre elles et mobiles sur une piste suivant un arc de cercle. Il comprend autant de dispositifs de préhension que de munitions. Il n'y a pas d'aménagement suivant une chaîne sans fin.

Le brevet US-A-4 860 633 décrit un magasin de munitions selon le préambule de la revendication 1 et disposé dans une tourelle de véhicule blindé selon lequel les munitions stockées verticalement et entraînées suivant une chaîne sans fin en étant placées dans des alvéoles reliées par des maillons. Les munitions sont retirées des alvéoles par des moyens de translation pour les placer sur un dispositif d'alimentation.

Le brevet US-A-4 318 331 décrit un magasin disposé en dehors de la tourelle d'un véhicule blindé. Les munitions sont disposées horizontalement et entraînées suivant une chaîne sans fin. Les munitions sont prélevées à l'aide d'un extracteur agissant sur leur culot pour les amener sur une civière de chargement.

Le but de l'invention est de concevoir un magasin de munitions d'un type totalement différent dans l'optique d'être associé à un système de chargement automatique des munitions dans le canon d'un char à partir d'un magasin pouvant être notamment situé en partie basse et à l'arrière du char et selon lequel les munitions sont simplement basculées vers l'extérieur du magasin pour être prises en charge par le système de chargement du canon équipant le véhicule.

Pour atteindre ce but, l'invention propose un magasin de munitions, en particulier pour char, comprenant un convoyeur assurant un stockage vertical des munitions pour amener celles-ci automatiquement jusqu'à une sortie du magasin, un dispositif pour extraire chaque munition hors du magasin, et un dispositif d'entraînement, le convoyeur comprenant une pluralité de tubes verticaux disposés côte à côte en formant une chaîne, des dispositifs de liaison entre deux tubes adjacents, le dispositif d'entraînement actionnant la chaîne à l'intérieur du magasin le long d'un chemin de roulement en forme de boucle fermée, les tubes formant la chaîne fermée, chaque dispositif de liaison entre deux tubes adjacents étant tel qu'un tube est mobile en translation circulaire par rapport à l'axe (A) d'au moins l'un des deux tubes adjacents, **caractérisé** en ce que chaque tube comporte un volet monté basculant vers leur extrémité inférieure, ce volet étant sollicité en permanence par un ressort de rappel contre le tube de manière à délimiter avec celui-ci un logement qui entoure la munition.

Le volet est formé d'un élément tubulaire semi-cylindrique de même rayon que les tubes et fermé à une extrémité par une paroi de fond en forme de demi-disque, ledit volet étant monté basculant autour d'une charnière supportée par l'un des dispositifs de liaison associés au tube.

Le magasin comprend un dispositif pour introduire des munitions à l'intérieur des tubes du convoyeur, un dispositif d'introduction étant associé à chaque tube.

Chaque dispositif d'introduction comprend un support prolongé d'un montant monté coulissant le long d'une rainure verticale interne du tube, une munition prenant appui sur le support qui vient lui-même en appui sur un épaulement interne prévu à la partie inférieure du tube.

Le support de chaque dispositif d'introduction est un demi-disque qui se positionne au niveau du demi-disque formé par la paroi de fond du volet associé pour former une paroi de fond circulaire en deux parties sur laquelle repose la munition du tube associé.

Le dispositif d'entraînement de la chaîne fermée formée par l'ensemble des tubes comprend au moins une courroie enroulée autour de deux galets d'axes verticaux dont l'un est entraîné en rotation par un organe moteur, et des moyens complémentaires situés sur la courroie et sur la chaîne formée par les tubes et qui coopèrent entre eux pour assurer l'entraînement de la chaîne des tubes.

La courroie est située à l'extérieur de la chaîne des tubes du convoyeur et elle s'étend parallèlement à une partie rectiligne de ladite chaîne.

Les moyens complémentaires comprennent des trous prévus le long de la courroie et des ergots latéraux supportés par les dispositifs de liaison, deux trous et deux ergots successifs étant espacés suivant un même pas de manière à ce que les ergots pénètrent dans les trous.

Le chemin de roulement comprend une gorge annulaire située sur la face interne de la plaque supérieure de l'ossature du magasin, qui est associée à au moins un galet à axe vertical, supporté à rotation par la plaquette-support de chaque dispositif de liaison de l'ensemble de liaison supérieur et qui roule dans la gorge, et deux rainures annulaires concentriques situées sur la face interne de la plaque inférieure de l'ossature, qui sont associées à deux billes supportées par la plaquette-support de chaque dispositif de l'ensemble de liaison inférieur et qui roulent respectivement dans les deux rainures.

Le dispositif d'extraction est de type basculant et comprend des premiers moyens pour provoquer le basculement de la munition au travers de la sortie du magasin, et des seconds moyens pour réceptionner la munition hors du magasin.

Les premiers moyens sont constitués par un doigt pivotant situé dans un plan vertical et actionné par un organe moteur, et une fente verticale prévue le long de chaque tube et dans laquelle peut s'engager en partie ledit doigt.

Les seconds moyens sont constitués par un berceau sensiblement incliné à 45°.

Le magasin comprend une entrée définie par une ouverture prévue dans la plaque supérieure du magasin, cette ouverture débouchant au droit de la chaîne de tubes du convoyeur, de manière à pouvoir introduire les munitions dans les différents tubes.

Un tel magasin peut avantageusement équiper un char dans lequel le berceau de réception d'une munition à la sortie du magasin peut coopérer avec un bloc d'acheminement d'un système de chargement automatique des munitions dans la chambre d'un canon supporté par la tourelle d'un char, le magasin étant alors avantageusement situé en partie basse et à l'arrière du char.

D'autres avantages, caractéristiques et détails de l'invention ressortiront de la description explicative qui va suivre faite en référence aux Dessins annexés donnés uniquement à titre d'exemple et dans lesquels :
- la figure 1 est une vue en perspective avec arrachements partiels d'un magasin de munitions conforme à l'invention,
- la figure 2 est une vue en perspective de deux tubes du convoyeur et des dispositifs de liaison les reliant d'une façon articulée,
- la figure 2a est une vue en coupe schématique de la partie inférieure d'un tube représenté à la figure 2,
- la figure 2b est une vue de détail simplifiée pour illustrer une forme différente des dispositifs de liaison entre les tubes du convoyeur,
- la figure 3 est une vue en coupe simplifiée suivant la ligne III-III de la figure 4,
- et la figure 4 est une vue de dessus simplifiée de la figure 1.

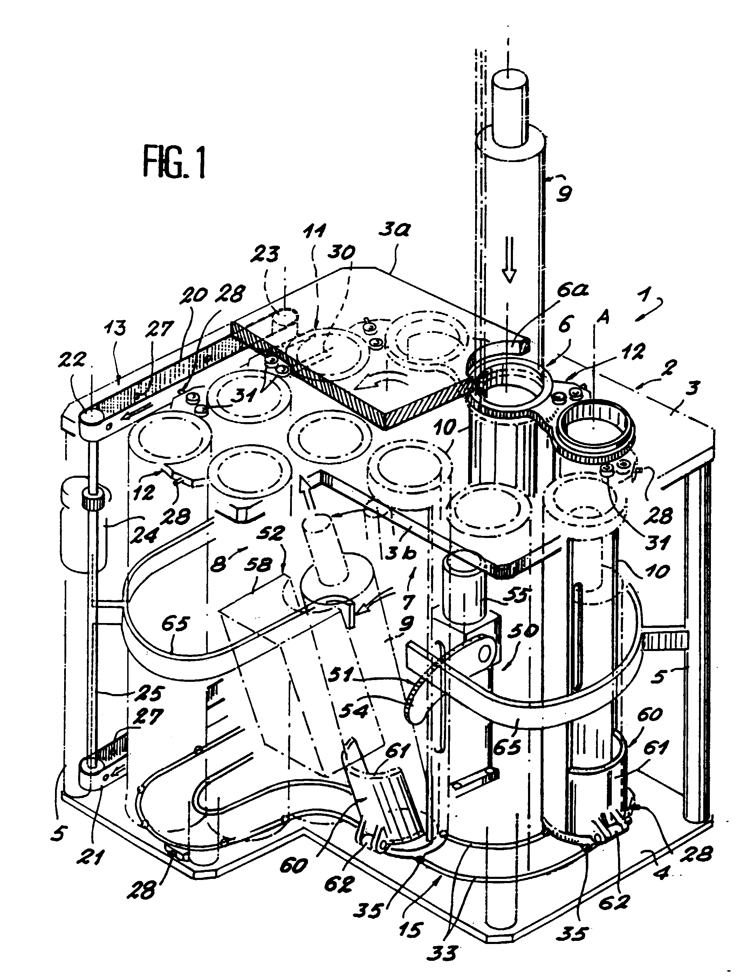

Le magasin de munitions 1 conforme à l'invention et tel que représenté à la figure 1 comprend une ossature 2 formée de deux plaques horizontales superposées respectivement supérieure 3 et inférieure 4. Ces deux plaques 3 et 4 sont globalement rectangulaires, de même dimensions et reliées l'une à l'autre par des montants verticaux 5. Une entrée 6 du magasin 1 est délimitée par une ouverture 6a prévue dans la plaque supérieure 3 et située à proximité de l'un des côtés de celle-ci, par exemple le côté 3a, alors qu'une sortie 7 s'étend sensiblement sur toute la hauteur du magasin 1 et est située au niveau de l'une des faces latérales ouvertes du magasin 1, par exemple celle correspondant au côté 3b de la plaque supérieure 3 qui est opposée à son côté 3a.

D'une manière générale, le magasin 1 est équipé d'un convoyeur 8 pour acheminer des munitions 9 introduites par l'entrée 6 du magasin 1 jusqu'à sa sortie 7 d'où elles sont extraites une à une pour être chargées dans le tube d'un canon (non représenté) d'une manière manuelle, semi-automatique ou automatique.

Dans l'exemple considéré ici, le convoyeur 8 comprend un ensemble de tubes verticaux 10 dans chacun desquels vient se loger une munition 9. Ces tubes 10 sont disposés côte à côte pour former une chaîne fermée 11. Le convoyeur 8 est complété par des dispositifs de liaison 12 entre deux tubes adjacents 10, et par un dispositif d'entraînement 13 de la chaîne 11 formée par l'ensemble des tubes à l'intérieur du magasin 1 le long d'un chemin de roulement 15 en forme de boucle fermée. Ces différents éléments sont agencés de manière à ce que, au cours du déplacement de la chaîne 11, les tubes 10 passent au droit de l'entrée 6 du magasin et en regard de sa sortie 7.

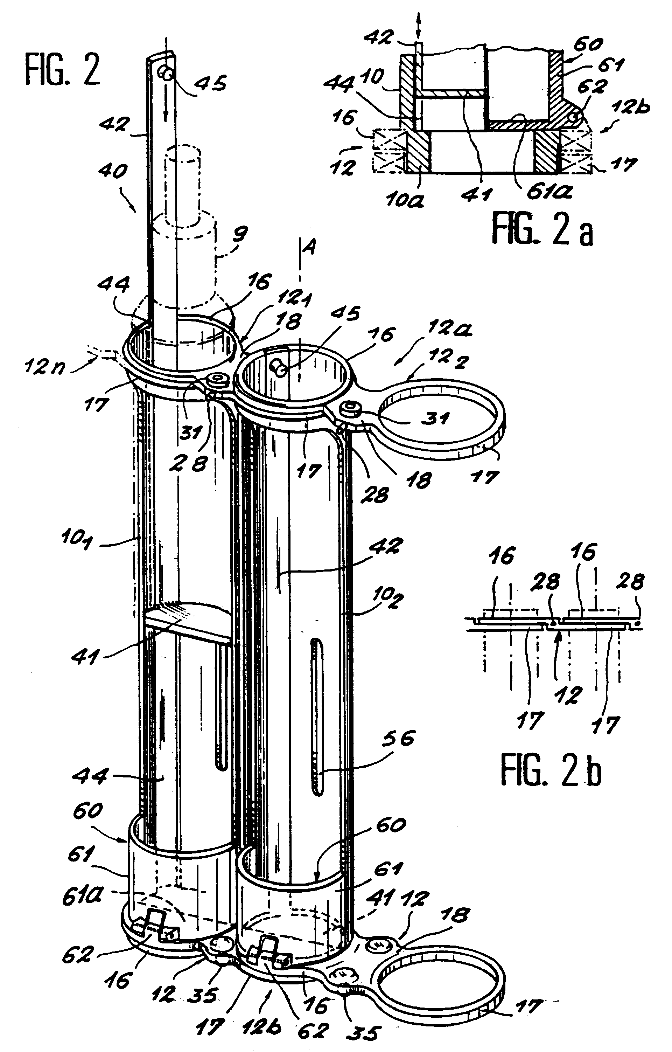

Comme cela est représenté à la figure 2, chaque tube 10 est, selon un mode préférentiel de réalisation de l'invention qui sera repris plus loin, un demi-tube ouvert de section semi-cylindrique.

Chaque dispositif de liaison 12 entre deux tubes adjacents 10 est conçu de manière telle qu'un tube 10 est mobile en translation circulaire par rapport à l'axe A d'au moins un des deux tubes adjacents. Dans l'exemple considéré ici, chaque dispositif de liaison 12 comprend deux anneaux circulaires 16 et 17 d'axes parallèles, solidaires d'une plaquette-support 18 et respectivement situés de part et d'autre de celle-ci. L'anneau 16 a un diamètre intérieur tel qu'il peut être emmanché à force autour de chaque tube 10, alors que l'anneau 17 a un diamètre intérieur tel qu'il peut être rapporté avec jeu autour de chaque tube 10.

Concrètement, l'anneau 16 d'un premier dispositif de liaison 12₁ est rapporté fixement autour d'un premier tube 10₁, alors que son anneau 17 est rapporté avec jeu autour d'un second tube 10₂ adjacent au premier tube 10₁. L'anneau 16 d'un second dispositif de liaison 12₂ est rapporté fixement autour du second tube 10₂, alors que son anneau 17 est rapporté avec jeu autour d'un troisième tube 10₃ (non représenté) adjacent au second tube 10₂ et ainsi de suite, l'anneau 16 (non représenté) d'un n-ième dispositif de liaison 12ₙ est rapporté autour du n-ième tube 10ₙ (non représenté), alors que son anneau 17 est rapporté avec jeu autour du premier tube 10₁.

Ainsi, l'anneau 16 d'un premier dispositif de liaison 12 et l'anneau 17 d'un second dispositif de liaison 12 sont au moins rapportés autour de chaque tube 10 du convoyeur 8. Dans l'exemple considéré ici, il est prévu deux ensembles de liaison supérieur 12a et inférieur 12b de dispositifs de liaison 12 respectivement situés vers les deux extrémités des tubes 10 pour faciliter le déplacement de la chaîne 11 formée par l'ensemble des tubes 10 du convoyeur 8.

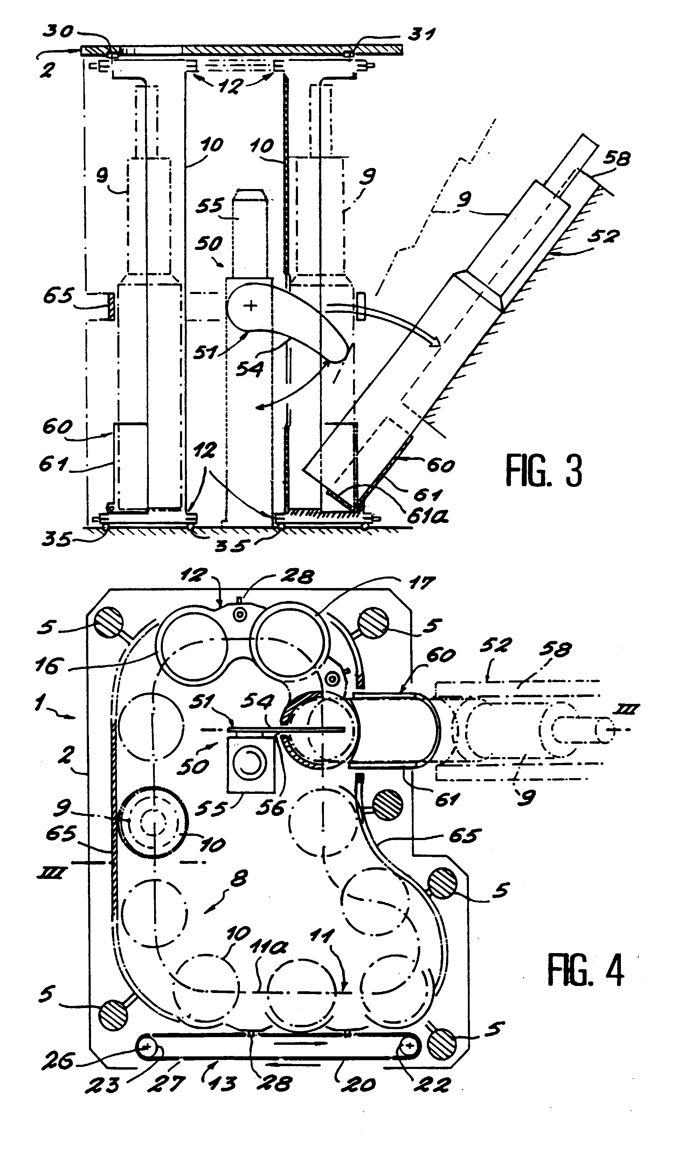

En se reportant aux figures 1 et 4, le dispositif d'entraînement 13 de la chaîne 11 formée par l'ensemble des tubes 10 du convoyeur 8 comprend deux courroies 20 et 21 superposées, enroulées chacune autour de deux galets 22 et 23 d'axes verticaux et entraînés par un organe moteur, tel qu'un moto-réducteur 24. Plus précisément, le moto-réducteur 24 entraîne un arbre vertical 25 qui supporte en rotation à ses deux extrémités les deux galets 22 par exemple, alors que les deux galets 23 sont montés libres en rotation au deux extrémités d'un arbre vertical 26.

Le dispositif d'entraînement 13 est logé à l'intérieur du magasin 1 et à l'extérieur de la chaîne fermée 11 formée par l'ensemble des tubes 10. Les deux courroies 20 et 21 sont respectivement situées au voisinage des plaques supérieure 3 et inférieure 4 de l'ossature du magasin 1, et elles s'étendent le long d'une partie rectiligne lla de la chaîne 11 des tubes 10 du convoyeur 8 (figure 4). L'entraînement positif de la chaîne 11 par les courroies 20 et 21 se réalise par des moyens complémentaires tels que des trous 27 prévus le long de chacune des courroies 20 et 21, et des ergots latéraux 28 prévus sur la chaîne 11, deux trous 27 et deux ergots 28 successifs étant espacés suivant un même pas de manière à ce que les ergots 28 s'engagent dans les trous 27 au fur et à mesure de l'avance des courroies 20 et 21. Les ergots 28 sont avantageusement situés au niveau des ensembles de liaison supérieur 12a et inférieur 12b, et ils sont portés par les plaquettes 18 qui supportent les anneaux 16 et 17.

Cependant, en considérant l'ensemble de liaison supérieur 12a représenté à la figure 2, les anneaux 16 et 17 montés autour d'un même tube 10 sont rapportés l'un sur l'autre, si bien que les deux plaquettes 18 qui supportent respectivement ces deux anneaux 16 et 17 sont décalées l'une par rapport à l'autre. Il en résulte que les ergots 28 qui s'étendent latéralement à partir de chacune des plaquettes 18 ne sont pas alignés. Aussi, en se reportant à la figure 2b, les deux anneaux 16 et 17 de chaque dispositif de liaison 12 sont avantageusement décalés l'un par rapport à l'autre pour que les ergots 28 soient alignés, de manière à ce qu'ils puissent s'engager dans les trous alignés 27 des courroies 20 et 21 du dispositif d'entraînement 13.

En se reportant aux figures 1 et 3, le chemin de roulement 15 de la chaîne 11 formée par l'ensemble des tubes 10 du convoyeur 8 est défini par des moyens de guidage respectivement prévus sur les faces internes des plaques supérieure 3 et inférieure 4 de l'ossature 2 du magasin 1. Plus précisément, sur la face interne de la plaque supérieure 3, il est prévu une gorge annulaire 30 à section sensiblement rectangulaire destinée à recevoir deux galets 31 d'axes verticaux supportés à rotation par la plaquette-support 18 de chaque dispositif de liaison 12 de l'ensemble de liaison supérieur 12a, ces deux galets 31 roulant respectivement sur les deux parois latérales de la gorge 30. Sur la face interne de la plaque inférieure 4, il est prévu deux rainures annulaires concentriques 33 dans lesquelles roulent respectivement deux billes 35 supportées par la plaquette-support 18 de chaque dispositif de liaison 12 de l'ensemble de liaison inférieur 12b.

En considérant les figures 2 et 2a, il va être décrit les moyens qui sont utilisés pour introduire une munition 9 dans un tube 10 du convoyeur 8.

Ces moyens sont constitués par un dispositif d'introduction 40 associé à chaque tube 10, c'est-à-dire qu'il y autant de dispositifs 40 que de tubes 10. En se reportant à la figure 2, chaque dispositif d'introduction 40 comprend un support 41 sous la forme d'un demi-disque de rayon légèrement inférieur à celui d'un tube 10 et un montant 42 raccordé par une extrémité à la périphérie du support 41. Ce montant 42 s'étend perpendiculairement au support 41 sur une hauteur sensiblement égale à la hauteur d'un tube 10. Le montant 42 présente en section transversale une forme arquée selon un rayon de courbure égal à celui du tube 10, et il est monté coulissant dans une rainure verticale interne 44 s'étendant entre l'extrémité supérieure de chaque tube 10 et un épaulement annulaire interne 10a formant butée prévu vers l'extrémité inférieure de chaque tube 10.

Vers son extrémité supérieure, le montant 42 présente un pion radial interne 45 qui sert d'élément de préhension pour un dispositif extérieur (non représenté) pour déplacer axialement le dispositif de chargement 40 le long du tube 10.

Le magasin 1 est équipé d'un dispositif 50 qui permet d'extraire automatiquement les munitions 9 hors du magasin 1. Selon un mode préférentiel de réalisation de l'invention, ce dispositif d'extraction 50 est du type basculant et il comprend des premiers moyens 51 pour provoquer le basculement de la munition 9 au travers de la sortie 7 du magasin 1 et des seconds moyens 52 pour réceptionner la munition 9 à l'extérieur du magasin 1.

Les premiers moyens 51 pour provoquer le basculement de la munition 9 sont situés à l'intérieur de la chaîne 11 formée par l'ensemble des tubes 10 et en regard de la sortie 7 du magasin 1. Dans l'exemple considéré ici, ces moyens 51 comprennent un doigt pivotant 54 actionné par un organe moteur 55. Ce doigt 54 est situé dans un plan vertical et peut s'engager en partie à l'intérieur d'une fente verticale 56 prévue le long de chaque tube 10.

Les seconds moyens 52 pour réceptionner la munition 9 à l'extérieur du magasin 1 sont constitués, dans l'exemple considéré ici, par un berceau 58 sensiblement incliné à 45°.

L'utilisation de tubes 10 semi-ouverts permet le basculement des munitions 9 à condition toutefois que les anneaux 16 et 17 des deux ensembles de liaison supérieur 12a et inférieur 12b entre deux tubes adjacents 10 soient situés respectivement de part et d'autre des munitions 9 pour ne pas entraver leur basculement. Autrement dit, la hauteur des tubes 10 est supérieure à celle des munitions 9.

Cependant, pour permettre à la munition 9 de basculer sous l'action du doigt pivotant 54, un volet basculant 60 est associé à chaque tube 10. Dans l'exemple considéré ici et comme visible aux figures 1 et 2, chaque volet basculant 60 est formé d'un élément tubulaire semi-cylindrique 61 de même rayon que les tubes 10 et fermé à une extrémité ou extrémité inférieure par une paroi de fond 61a en forme de demi-disque.

Chaque volet 60 est situé vers l'extrémité inférieure du tube 10 associé en faisant face à l'ouverture du tube, et il est monté basculant autour d'un axe horizontal au moyen d'une charnière 62 fixée à l'anneau 16 du dispositif de liaison 12 de l'ensemble de liaison inférieur 12a associé au tube 10. La charnière 62 comprend un ressort de rappel (non représenté) qui sollicite en permanence le volet 60 contre le tube 10, de manière à ce qu'ils délimitent entre eux un logement cylindrique qui entoure la partie inférieure de la munition 9. Le demi-disque formé par la paroi de fond 61a du volet 60, lorsque celui-ci est en position verticale, vient se placer au même niveau que le demi-disque formé par le support 41 du dispositif d'introduction 40 associé au tube 10, pour délimiter entre eux une paroi de fond circulaire en deux parties sur laquelle vient prendre appui la munition 9, chacune des deux parties 41 et 61a de cette paroi de fond venant en appui sur l'épaulement 10a situé à la partie inférieure du tube 10 (figure 2a).

Ainsi, lorsque la munition 9 bascule sous l'action du doigt 54, elle entraîne le basculement du volet 60 dont la paroi de fond 61a supporte la munition 9 pour qu'elle reste immobile en translation par rapport au volet 60.

Il est également prévu à l'intérieur du magasin 1 au moins un rail de guidage 65 fixé aux montants 5 de l'ossature 2 et qui suit le chemin de roulement 15 pour éviter que les munitions 9 puissent faire basculer d'elles-mêmes les volets 60. Ce rail de guidage 65 est situé sensiblement à mi-hauteur des tubes 10. Bien évidemment, ce rail 65 est interrompu au niveau de la sortie 7 du magasin 1 pour laisser un passage à la munition 9 lors de son basculement vers la sortie 7 du magasin 1.

Il va être maintenant décrit les opérations d'introduction et d'extraction des munitions dans le magasin 1 précédemment décrit en considérant le mode de réalisation préférentiel de l'invention, en supposant que le convoyeur 8 est vide et arrêté avec un tube 10 situé au droit de l'ouverture d'entrée 6 du magasin 1.

Le mode opératoire pour introduire une munition 9 dans un tube 10 consiste :
- à tirer le montant 42 du dispositif d'introduction 40 associé au tube 10 au travers de l'ouverture d'entrée 6 du magasin au moyen d'un organe de préhension (non représenté) qui saisit le pion radial 45 du montant 42, de manière à amener la plaque-support 41 au voisinage de l'entrée 6,
- à positionner verticalement une munition 9 sur la plaque-support 41,
- à faire redescendre le dispositif d'introduction 40 à l'intérieur du tube 10 jusqu'à ce que la plaque-support 41 vienne reposer sur l'épaulement 10a du tube 10,
- et à commander le moto-réducteur 24 du dispositif d'entraînement 13 de la chaîne 11 formée par les tubes 10 du convoyeur 8 pour amener un autre tube 10 au droit de l'ouverture d'entrée 6a du magasin pour procéder à l'introduction d'une autre munition 9, et ainsi de suite jusqu'à ce que le magasin soit rempli.

Il est à noter que ce mode opératoire autorise, en cas de besoin, le prélèvement d'une munition 9 hors du magasin 1 par l'ouverture d'entrée 6 en tirant le montant 42 du dispositif d'introduction 40 associé au tube 10 où est logée la munition 9.

Dans le cas où un tel magasin 1 est situé à l'intérieur d'un char en partie basse et l'arrière de celui-ci, l'ouverture d'entrée 6a est faite dans le châssis du char et sa tourelle est orientée de manière à dégager si nécessaire cette ouverture d'entrée 6a pour permettre les opérations de remplissage du magasin 1.

En supposant qu'une munition 9 a été tirée par le canon du char, il faut procéder au chargement d'une nouvelle munition 9 dans la chambre du canon et par conséquent l'extraire du magasin 1.

Les opérations d'extraction de la munition consistent :
- à commander, si nécessaire, le moto-réducteur 24 du dispositif d'entraînement 13 du convoyeur 8 pour amener un tube 10 contenant une munition 9 en regard de la sortie 7 du magasin 1,
- à actionner l'organe moteur 55 du dispositif d'extraction 50 pour faire pivoter le doigt 54 qui, en pénétrant à l'intérieur du tube 10 par la fente 56 de celui-ci, vient en contact avec la munition 9 et provoque son basculement et celui du volet 60 associé (le char étant supposé se trouver sur un terrain sensiblement plat), la munition 9 étant directement reçue sur le berceau 58 situé à l'extérieur du magasin 1,
- à prélever la munition 9 du berceau pour procéder ensuite à son chargement manuel dans la chambre du canon, ou à commander un dispositif de chargement automatique,
- et à commander le dispositif d'entraînement 13 du convoyeur 8 pour positionner le tube 10 d'une autre munition 9 en regard de la sortie 7 du magasin 1.

Dans l'exemple considéré ici, le magasin 1 est ouvert sur chacune de ses faces latérales. D'une manière générale, l'ossature du magasin 1 est fonction du matériel qu'il est destiné à alimenter, si bien que cette ossature sera le plus souvent constituée par une partie du châssis du matériel associé. Cependant, le magasin peut avoir sa propre ossature et former un ensemble unitaire.

En variante du mode de réalisation précédemment décrit, on peut envisager de supprimer le dispositif d'introduction 40 d'une munition 9 qui est associé à chaque tube 10, et ne prévoir qu'un seul dispositif d'introduction extérieur au magasin.

Bien entendu, l'invention n'est pas limitée aux moyens tels que décrits précédemment, et elle inclut les équivalents techniques à la portée de l'homme du métier, notamment en ce qui concerne le dispositif d'entraînement de la chaîne de tubes du convoyeur et le dispositif d'extraction des munitions hors du magasin.

## Revendications

1. Magasin de munitions, en particulier pour char, comprenant un convoyeur (8) assurant un stockage vertical des munitions pour amener celles-ci automatiquement jusqu'à une sortie (7) du magasin (1), un dispositif (50) pour extraire chaque munition (9) hors du magasin (1), et un dispositif d'entraînement (13), le convoyeur (8) comprenant une pluralité de tubes verticaux (10) disposés côte à côte en formant une chaîne (11), des dispositifs de liaison (12) entre deux tubes adjacents (10), le dispositif d'entraînement (13) actionnant la chaîne à l'intérieur du magasin (1) le long d'un chemin de roulement (15) en forme de boucle fermée, les tubes (10) formant la chaîne fermée (11), chaque dispositif de liaison (12) entre deux tubes adjacents (10) étant tel qu'un tube (10) est mobile en translation circulaire par rapport à l'axe (A) d'au moins l'un des deux tubes (10) adjacents, **caractérisé** en ce que chaque tube comporte un volet (60) monté basculant vers leur extrémité inférieure, ce volet (60) étant sollicité en permanence par un ressort de rappel contre le tube (10) de manière à délimiter avec celui-ci un logement qui entoure la munition (9).

2. Magasin de munitions selon la revendication 2, caractérisé en ce que le volet (60) est formé d'un élément tubulaire semi-cylindrique (61) de même rayon que les tubes (10) et fermé à une extrémité par une paroi de fond (61a) en forme de demi-disque, ledit volet (60) étant monté basculant autour d'une charnière (62) supportée par l'un des dispositifs de liaison (12) associés au tube (10).

3. Magasin de munitions selon la revendication 1 ou 2, caractérisé en ce qu'il comprend un dispositif (40) pour introduire des munitions à l'intérieur des tubes (10) du convoyeur (8), un dispositif d'introduction (40) étant associé à chaque tube (10).

4. Magasin de munitions selon la revendication 3, caractérisé en ce que chaque dispositif d'introduction (40) comprend un support (41) prolongé d'un montant (42) monté coulissant le long d'une rainure verticale interne (44) du tube (10), une munition (9) prenant appui sur le support (41) qui vient lui-même en appui sur un épaulement interne (10a) prévu à la partie inférieure du tube (10).

5. Magasin de munitions selon la revendication 4, caractérisé en ce que le support (41) de chaque dispositif d'introduction (40) est un demi-disque qui se positionne au niveau du demi-disque formé par la paroi de fond (61a) du volet (60) associé pour former une paroi de fond circulaire en deux parties sur laquelle repose la munition (9) du tube (10) associé.

6. Magasin de munitions selon l'une quelconque des revendications 1 à 5, caractérisé en ce que le dispositif d'entraînement (13) de la chaîne fermée (11) formée par l'ensemble des tubes (10) comprend au moins une courroie (20) enroulée autour de deux galets (22,23) d'axes verticaux dont l'un est entraîné en rotation par un organe moteur (24), et des moyens complémentaires situés sur la courroie (20) et sur la chaîne (11) formée par les tubes (10) et qui coopèrent entre eux pour assurer l'entraînement de la chaîne (11) des tubes (10).

7. Magasin de munitions selon la revendication 6, caractérisé en ce que la courroie (20) est située à l'extérieur de la chaîne (11) des tubes (10) du convoyeur (8) et elle s'étend parallèlement à une partie rectiligne (11a) de ladite chaîne (11).

8. Magasin de munitions selon la revendication 6 ou 7, caractérisé en ce que les moyens complémentaires comprennent des trous (27) prévus le long de la courroie (20) et des ergots latéraux (28) supportés par les dispositifs de liaison (12), deux trous (27) et deux ergots (28) successifs étant espacés suivant un même pas de manière à ce que les ergots pénètrent dans les trous.

9. Magasin de munitions selon l'une quelconque des revendications 1 à 8, caractérisé en ce que le chemin de roulement (15) comprend une gorge annulaire (30) située sur la face interne de la plaque supérieure (3) de l'ossature (2) du magasin (1), qui est associée à au moins un galet (31) à axe vertical, supporté à rotation par la plaquette-support (18) de chaque dispositif de liaison (12) de l'ensemble de liaison supérieur (12a) et qui roule dans la gorge (30), et deux rainures annulaires concentriques (33) situées sur la face interne de la plaque inférieure (4) de l'ossature (2), qui sont associées à deux billes (35) supportées par la plaquette-support (18) de chaque dispositif (12) de l'ensemble de liaison inférieur (12b) et qui roulent respectivement dans les deux rainures (33).

10. Magasin de munitions selon l'une quelconque des revendications précédentes, caractérisé en ce que le dispositif d'extraction (50) est de type basculant et comprend des premiers moyens (51) pour provoquer le basculement de la munition (9) au travers de la sortie (7) du magasin (1), et des seconds moyens (52) pour réceptionner la munition (9) hors du magasin (1).

11. Magasin de munitions selon la revendication 10, caractérisé en ce que les premiers moyens (51) sont constitués par un doigt pivotant (54) situé dans un plan vertical et actionné par un organe moteur (55), et une fente verticale (56) prévue le long de chaque tube (10) et dans laquelle peut s'engager en partie ledit doigt (54).

12. Magasin de munitions selon la revendication 10 ou 11, caractérisé en ce que les seconds moyens (52) sont constitués par un berceau (58) sensiblement incliné à 45°.

13. Magasin de munitions selon l'une quelconque des revendications précédentes, caractérisé en ce qu'il comprend une entrée définie par une ouverture (6) prévue dans la plaque supérieure (3) du magasin, cette ouverture débouchant au droit de la chaîne (11) de tubes du convoyeur (8), de manière à pouvoir introduire les munitions dans les différents tubes (10).

## Patentansprüche

1. Munitionsmagazin, vor allem für einen Panzer, mit einem Förderer (8) zur vertikalen Lagerung der Munitionen und zum automatischen Zubringen der Munitionen bis zu einem Ausgang (7) des Magazins (1), einer Vorrichtung (50) zum Herausnehmen jeder Munition (9) aus dem Magazin (1), und einer Antriebsvorrichtung (13), wobei der Förderer (8) eine Mehrzahl senkrechter Rohre (10) umfaßt, die nebeneinander angebracht sind und eine Kette (11) bilden, aus Verbindungsvorrichtungen (12) zwischen zwei nebeneinanderliegenden Rohren (10), wobei die Antriebsvorrichtung (13) die Kette im Inneren des Magazins (1) entlang einer Rollbahn (15) in Form einer geschlossenen Schleife antreibt und die Rohre (10) die geschlossene Kette (11) bilden, wobei jede Verbindungsvorrichtung (12) zwischen zwei nebeneinanderliegenden Rohren (10) so gestaltet ist, daß ein Rohr (10) in kreisförmiger Verschiebung bezogen auf die Achse (A) von mindestens einem der danebenliegenden Rohre (10) in Verschiebung beweglich ist, **gekennzeichnet dadurch,** daß jedes Rohr (10) eine Klappe (60) umfaßt, die kippend gegen das untere Ende montiert ist, wobei diese Klappe (60) ständig von einer Rückholfeder gegen das Rohr (10) so beansprucht wird, daß mit diesem ein Hohlraum gebildet ist, der die Munition (9) umgibt.

2. Munitionsmagazin gemäß dem Anspruch 2, gekennzeichnet dadurch, daß die Klappe (60) aus einem röhrenförmigen halbzylindrischen Element (61) mit gleichem Radius wie die Rohre (10) gebildet wird, das an einem Ende durch eine Bodenwand (61a) in Halbscheibenform verschlossen wird, wobei besagte Klappe (60) um ein Scharnier (62) kippend montiert ist, welches Scharnier von einer der mit dem Rohr (10) verbundenen Verbindungsvorrichtungen (12) getragen wird.

3. Munitionsmagazin gemäß dem Anspruch 1 oder 2, gekennzeichnet dadurch, daß es eine Vorrichtung (40) zum Einführen der Munitionen in das Innere der Rohre (10) des Förderers (8) umfaßt, wobei zu jedem Rohr (10) eine Einführvorrichtung (40) gehört.

4. Munitionsmagazin gemäß dem Anspruch 3, gekennzeichnet dadurch, daß jede Einführvorrichtung (40) einen Träger (41) umfaßt, der mit einer Strebe (42) verlängert wird, die entlang einer senkrechten Innenrille (44) des Rohrs (10) gleitend montiert ist, wobei eine Munition (9) auf dem Träger (41) aufliegt, der selbst auf einem inneren Ansatz (10a) anliegt, der im unteren Teil des Rohrs (10) vorgesehen ist.

5. Munitionsmagazin gemäß dem Anspruch 4, gekennzeichnet dadurch, daß der Träger (41) jeder Einführvorrichtung (40) eine Halbscheibe ist, die sich auf der Ebene der von der Bodenwand (61a) der dazugehörenden Klappe (60) positioniert, um eine kreisförmige Bodenwand aus zwei Teilen zu bilden, auf der die Munition (9) des dazugehörenden Rohrs (10) aufliegt.

6. Munitionsmagazin gemäß einem beliebigen der Ansprüche 1 bis 5, gekennzeichnet dadurch, daß die Antriebsvorrichtung (13) der geschlossenen Kette (11) geformt aus der Einheit der Rohre (10) mindestens einen Riemen (20) umfaßt, der um zwei Walzen (22, 23) mit vertikalen Achsen aufgerollt ist, von welchen eine drehend durch ein Antriebsorgan (24) angetrieben wird, so wie ergänzende Mittel auf dem Riemen (20) und auf der Kette (11) bestehend aus den Rohren (10), und die untereinander zusammenwirken, um den Antrieb der Kette (11) der Rohre (10) sicherzustellen.

7. Munitionsmagazin gemäß dem Anspruch 6, gekennzeichnet dadurch, daß der Riemen (20) im Inneren der Kette (11) der Rohre (10) des Förderers (8) untergebracht ist und sich parallel zu einem geradlinigen Teil (lla) besagter Kette (11) erstreckt.

8. Munitionsmagazin gemäß dem Anspruch 6 oder 7, gekennzeichnet dadurch, daß die ergänzenden Mittel Bohrungen (27) umfassen, die entlang des Riemens (20) vorgesehen sind, sowie seitliche Dorne (28), die von den Verbindungsvorrichtungen (12) getragen werden, wobei zwei aufeinanderfolgende Bohrungen (27) und zwei aufeinanderfolgende Dorne (28) jeweils im gleichen Abstand angebracht sind, so daß die Dorne in die Bohrungen eingreifen.

9. Munitionsmagazin gemäß einem beliebigen der Ansprüche 1 bis 8, gekennzeichnet dadurch, daß die Rollbahn (15) eine ringförmige Hohlkehle (30) auf der Innenfläche der oberen Platte (3) des Gerippes (2) des Magazins (1) umfaßt, die mit mindestens einer Walze (31) mit vertikaler Achse verbunden ist, die drehend von der Tragplatte (18) jeder Verbindungsvorrichtung (12) der Einheit zur oberen Verbindung (12a) getragen wird und in einer Hohlkehle (30) läuft, sowie zwei konzentrische ringförmige Rillen (33) auf der Innenfläche der unteren Platte (4) des Gerippes (2), zu denen zwei Kugeln (35) gehören, die von der Tragplatte (18) jeder Vorrichtung (12) der unteren Verbindungseinheit (12b) getragen werden und jeweils in den beiden Rillen (33) laufen.

10. Munitionsmagazin gemäß einem beliebigen der obenstehenden Ansprüche, gekennzeichnet dadurch, daß die Ausziehvorrichtung (50) eine kippende Vorrichtung ist und erste Mittel (51) umfaßt, um das Kippen der Munition (9) durch den Ausgang (7) des Magazins (1) zu bewirken, sowie zweite Mittel (52) zur Übernahme der Munition (9) außerhalb des Magazins (1).

11. Munitionsmagazin gemäß dem Anspruch 10, gekennzeichnet dadurch, daß die ersten Mittel (51) aus einem Schwenkfinger (54) in einer vertikalen Ebene bestehen, der von einem Antriebsorgan (55) angetrieben wird und aus einer senkrechten Spalte (56), die entlang jedes Rohrs (10) vorgesehen ist, in der besagter Finger (54) zum Teil eingreifen kann.

12. Munitionsmagazin gemäß dem Anspruch 10 oder 11, gekennzeichnet dadurch, daß die zweiten Mittel (52) aus einem Sattel (48) bestehen, der in etwa um 45° geneigt ist.

13. Munitionsmagazin gemäß einem beliebigen der obenstehenden Ansprüche, gekennzeichnet dadurch, daß es einen Eingang umfaßt, der durch eine Öffnung (6) in der oberen Platte (3) des Magazins definiert ist, und die gegenüber der Kette (11) der Rohre (10) des Förderers (8) so mündet, daß die Munitionen in die verschiedenen Rohre (10) eingefügt werden können.

## Claims

1. An ammunition magazine, in particular for a tank, comprising a conveyor (8) which ensures the vertical storage of the munitions and which brings the latter automatically up to the magazine (1) outlet (7), a device (50) to extract each munition (9) from the magazine (1), and a drive mechanism (13), the conveyor (8) comprising a plurality of vertical tubes (10) arranged side by side to form a chain (11), devices (12) to link two adjacent tubes (10), the drive mechanism (13) activating the chain inside the magazine (1) along a rolling path (15) in the shape of a closed loop, the tubes (10) forming the closed chain (11), each linking device (12) between two adjacent tubes (10) being such that a tube (10) is able to move in circular translation with respect to the axis (A) of at least one of the two adjacent tubes (10), ***characterized in that*** each tube incorporates a flap (60) mounted swinging to its lower end, this flap (60) being permanently stressed by a return spring against the tube (10) so as to create a housing together with the tube which surrounds the munition (9).

2. An ammunition magazine according to Claim 1, characterized in that the flap (60) is formed of a semicylindrical tubular element (61) having the same radius as the tubes (10) and closed at one end by a bottom wall (61a) in a half-disk shape, said flap (60) being mounted swinging around a hinge (62) supported by one of the linking devices (12) associated with the tube (10).

3. An ammunition magazine according to Claim 1 or 2, characterized in that it comprises a device (40) to introduce the munitions into the tubes (10) of the conveyor (8), an introduction device (40) being associated with each tube (10).

4. An ammunition magazine according to Claim 3, characterized in that each introduction device (40) comprises a support (41) extended by a beam (42) mounted sliding along an inner vertical groove (44) of the tube (10), a munition (9) bearing on the support (41) which itself bears on an inner shoulder (10a) provided on the lower part of the tube (10).

5. An ammunition magazine according to Claim 4, characterized in that the support (41) of each introduction device (40) is a half-disk positioned level with the half-disk formed by the bottom wall (61a) of the associated flap (60) to form a two-part circular bottom on which the munition (9) of the associated tube (10) rests.

6. An ammunition magazine according to any one of Claims 1 to 5, characterized in that the drive mechanism (13) of the closed chain (11) formed by the tube (10) assembly comprises at least one belt (20) wound round two vertical axis rollers (22, 23) one of which is driven in rotation by a motor element (24), and supplementary means located on the belt (20) and on the chain (11) formed by the tubes (10) and which cooperate together to drive the tube (10) chain (11).

7. An ammunition magazine according to Claim 6, characterized in that the belt (20) is located to the outside of the conveyor (8) tube (10) chain (11) and extends in parallel to a rectilinear part (11a) of said chain (11).

8. An ammunition magazine according to Claim 6 or 7, characterized in that the supplementary means comprise holes (27) provided along the belt (20) and lateral snugs (28) supported by linking devices (12), two successive holes (27) and two successive snugs (28) being spaced such that each of the snugs penetrates into the holes.

9. An ammunition magazine according to any one of Claims 1 to 8, characterized in that the rolling path (15) comprises a ring-shaped groove (30) located on the inner face of the upper plate (3) of the magazine (1) frame (3), which is associated with at least one vertical axis roller (31), supported in rotation by the support plate (18) of each linking device (12) of the upper linking assembly (12a) and which rolls in the groove (30), and two concentric ring-shaped grooves (33) located on the inner face of the lower plate (4) of the frame (2), which are associated with two ball-bearings (35) supported by the support plate (18) of each device (12) of the lower linking assembly (12b) and which respectively roll in the two grooves (33).

10. An ammunition magazine according to any one of the above Claims, characterized in that the extraction device (50) is of the swinging type and comprises first means (51) to cause the munition (9) to swing through the magazine (1) outlet (7), and second means (52) to receive the munition (9) outside the magazine (1).

11. An ammunition magazine according to Claim 10, characterized in that the first means (51) are formed by a pivoting finger (54) located in a vertical plane and activated by a motor element (55), and a vertical slot (56) provided along each tube (10) and in which part of said finger (54) can engage.

12. An ammunition magazine according to Claim 10 or 11, characterized in that the second means (52) are formed of a cradle (58) substantially inclined at an angle of 45°.

13. An ammunition magazine according to any one of the above Claims, characterized in that it comprises an inlet defined by an opening (6) provided in the upper plate (3) of the magazine, this opening opening out to the right of the conveyor (8) tube (10) chain (11), so as to be able to introduce the ammunition into the different tubes (10).
